# EUROPEAN PATENT APPLICATION

(11) **EP 4 513 060 A1**
(43) Date of publication of application: **26.02.2025**
(21) Application number: 22938380.7
(22) Date of filing: 18.04.2022
(51) Int. Cl.: F16H 41/02, B62M 19/00

(54) **ELECTROMAGNETICALLY CONTROLLED HYDRAULIC TRANSMISSION SYSTEM WITH GEARS FOR VEHICLES, WITH OPTIONAL ELECTRICAL GENERATION AND PROPULSION**

(71) Applicant: Bendito Vallori, Sebastián Enrique, 07300 Inca Islas Baleares (ES)
(72) Inventor: Bendito Vallori, Sebastián Enrique, 07300 Inca Islas Baleares (ES)
(74) Representative: Garavelli, Paolo
(86) International application number: PCT/ES2022/070235
(87) International publication number: WO 2023/203259

(57) **Abstract**

Hydraulic and electromechanical device installed in a vehicle that transmits the rotary motion of its engine, with developments of such power and that can reverse its direction, to the means that support and propel it and to an electric generator that recovers energy during descent and optionally the vehicle's engine.

## Description

The present invention refers to the hydraulic and electromagnetic circuits, both equipped with flexible and accommodating ducts, installed in a vehicle, which allow the thrust exerted by the rotary movement of the motor source to be transmitted at will to the propeller or propellers. that propel it and/or one or more of the wheels that support and propel it, thanks to the developments available between both parts: driving and pushing support; transmission, whose flow can be reversed in transit so that the vehicle reverses, maintaining the direction of tyhe motor rotation or partially suspend it in order to avoid superfluous friction.

The system has an electrical generator integrated into said circuits: hydraulic and electromagnetic, intended to control the flow in the former and feed the latter, as will be seen; generator, which can also be used as an alternative engine for the vehicle in which it is installed.

The electromagnetically controlled hydraulic system presented here has a discretionary flow direction inverter system which allows the driver to reverse in any of the vehicles detailed below:
- A bicycle, in which disappears the current side chain that joins the pedalier and the rear wheel, Cause of harmful tensions on the pedalier and the rear axle, given the asymmetry of the force applied to both by the chain when the tract tension of the rear wheel movement is produced from the pedals; The Pedalier, is here constituted by a central disc between the two pedals and, the wheel, by an equally centralized ring in the bicycle chassis; Both pieces are inter-cononeated by the cited hydraulic circuit and are transferred by the transmitting fluid of therotary power, balanced as will be detailed.

Besides, by the same method, the driving force can be administered at will in a synchronous manner to the front wheel without it losing any of its current qualities and functions, something that is not feasible today.

On the other hand, as it is equipped with an electric generator integrated into the hydraulic circuit,It can use this energy as an additional contribution to the effort developed by the cyclist or it can be converted at the user's discretion into an electric motorcycle capable of recovering energy during descents from high altitudes.

As the hydraulic and electrical circuits are integrated into the bicycle chassis, it also gives it a greater aerodynamic coefficient than that found in classic bicycles.
- Any vehicle: air, marine or land, in which the hydraulic system by electromagnetic control presented here transfers energy by fluid pressure from the engine, regardless of its power source, to the propeller or wheels that the vehicle has in question for its propulsion and support; With this, the weight of these vehicles is optimized by lightening the transmission and the development of the primary driving energy and saving on the number of component parts.

In a land vehicle, it allows the number of pushing wheels to be discretionary for the driver.

In naval assembly, the through-hull hole in the shaft that goes from the engine to the propeller is avoided, which sometimes causes unwanted water inlets of water.

In marine vessels and aircraft, the propeller can be oriented at will in three dimensions on a support point, since the flexibility of its power acquisition path allows it, which is why it constitutes a propeller that can be steered in vertical ascent or horizontal flight in an aerial vehicle and a balancer of the horizontal thrust in a marine ship as well as the rudder of any vehicle that integrates it.

According to the previous research carried out, the device claimed here does not currently exist, so I request that you grant me the rights corresponding to the invention that is described below in a practical case of industrial application, which is reinforced in its understanding with a series of schematic figures that represent it; In all of them, the dashed lines followed by a dot indicatethe hollowness of the space on which they are drawn and those who have discontinuous stroke reflect that it is hidden in that view.

For explanatory purposes, here it is worth adding to the above that the aforementioned hydraulic transmission occurs between a flow emitting element, which we will callmotor, and other recipients of said flow, in a discretionary number as will be explained, to thewhich we will call for now in general as action element;the two elements: motor and action, are analogous in their constitution, both assuming the opposed installation of two container bodies, a mirror image of each other in their geometry, which only differ in that one has a series of electrovalves installed while the other another does not, leaving a free flow path through it as will be seen; The first of such a pair receives said fluid, controlling its circulation, while the second evacuates it whenever it receives it, so we will call them respectively the supply casing and the evacuation casing.

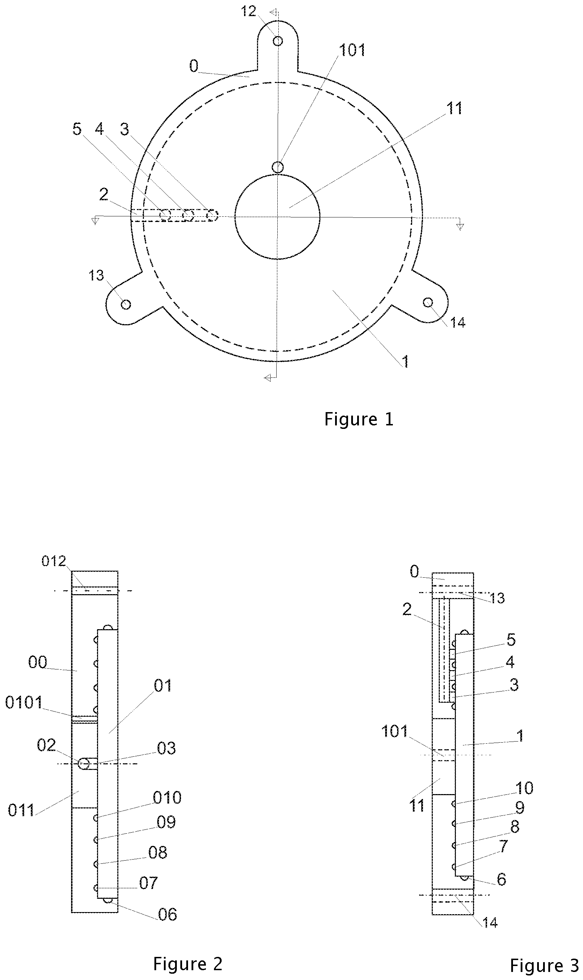

Figure 1 shows the external elevation view of a power supply casing, with the anagram 0.

The supply casing (0) is made up of a rigid, dense and pressure-resistant cylindrical container; its geometry is characterized by having:
- Three equal protuberances, pierced by separate threaded cylindrical holes, generically called supply casing coupling, under the respective designation in this figure of numbers.
- Into the cylindrical body of the same (0) a coaxial hole, marked with the number 11, that passes through its center which we will here in after call the supply casing via.
- A cylindrical cavity, locate in its side hidden in this view, of a certain depth and coaxial to it (11) is a concavity, designated here with the number 1, which we will call the supply casing sinus.
- Transversely to said supply casing (0), under the sign 2 and hidden in this view due to its internal location in the supply casing (0), a lateral duct opens which we will call the supply duct; It (2) has its beginning on the external side of the supply casing (0) and communicates successively with three solenoid valves, located respectively at different radii of the sinus (1), which we will call and designate in this figure respectively as low solenoid valve, with acronym 3, medium solenoid valve, with acronym 4, and high solenoid valve, with 5.
- Over the supply casing casing via (11), a cylindrical hole opens parallel to it that connects the two bases of that (0) which we call the supply casing counter and we see under sign 101.

Figure 2 shows the profile of an evacuation casing; Since, as has been said, the geometry of both casings is mirror-image to each other, except that the supply casing (0) incorporates three solenoid valves (3, 4 and 5), in order to graphically differentiate them for explanatory purposes, in All the figures, the annotation of the parts drawn on the evacuation casings, differ from those shown in the previous figure in that their symbols have a 0 prefixed to those of the parts of the former.

Thus, with the emblem 00, this figure represents the view from the right of the cut along the line with arrows to the left drawn in the previous figure, corresponding to its symmetrical twin sister: the supply casing (0).

, Thus we have:
- Three equal protuberances, two of which are not seen in the present view, pierced by separate threaded cylindrical holes generically called the evacuation casing coupling and the upper one seen here under the designation in this figure of the number 012.
- A cavity of a certain depth, cylindrical and coaxial to the evacuation casing (00), which we will call the evacuation casing sinus, designating it with the number 01.
- A coaxial hole that passes through its center into the cylindrical body of the evacuation casing (00), marked with the number 011, which we will hereinafter call the evacuation casing via.
- Over the evacuation casing via (011) a cylindrical hole opens parallel to it that connects the two bases of that (00) which we call the evacuation casing counter and we see under the sign 0101.
- A semitoroidal channel, open in the wall of the evacuation casing sinus (01) and concentric to it (01), which we will call the evacuation bearing channel and is indicated on its lower side with the symbol 06.
- Under the sign 02 you can see the opening of the evacuation duct; The same (02) has its beginning on the external side of the evacuation casing (00) and communicates with it (02) by a open conduit which we will call the low outlet, with the acronym 03, which is a riverbed in it (00) opening towards the evacuation casing sinus (01).

Behind thelow exit (03) and, therefore hidden in this view and consequently without designation, they open successively from the ductevacuation (02) the middle exit and the high exit; The three outputs: low (03), medium and high, as will be seen, are confronted respectively in their assembly in the system with the low (3), medium (4) and high (5) solenoid valves located in the supplly casing (0).

Likewise reflected here are the openings corresponding to a series of semitoroidal grooves of different radius, made in the wall of the evacuation sinus (01) and concentric to it (01), to whichWe will designate and know how:
→ With the logo 07, the high evacuation static joint channel.
→ With the logo 08, the medium-high evacuation static joint channel.
→ With the logo 09, the medium low evacuation static joint channel.
→ With the anagram, 010 the low evacuation static joint channel.

Figure 3 shows the top view of the power housing cut by the line with downward arrows reflected in Figure 1; The current figure repeats the notation of Figure 1, to which a semitoroidal channel has been added, open in the wall of the feed casing sinus (0) and concentric to it (0), which we will call the supply bearing channel and is indicated on its lower side with the symbol 6.

The diameter of both fixed bearing channels: supply (6) and evacuation (06) is the same.

Likewise reflected here are the openings corresponding to a series of semitoroidal grooves of different radius, made in the wall of the evacuation sinus (01) and concentric to it (01), to whichWe will designate and know how:
With the logo 7, the high supply static joint channel.
With the anagram 8, the medium-high supply static joint channel.
With the anagram 9, the low-medium supply staticjoint channel.
With the logo 10, the low supply static joint channel.

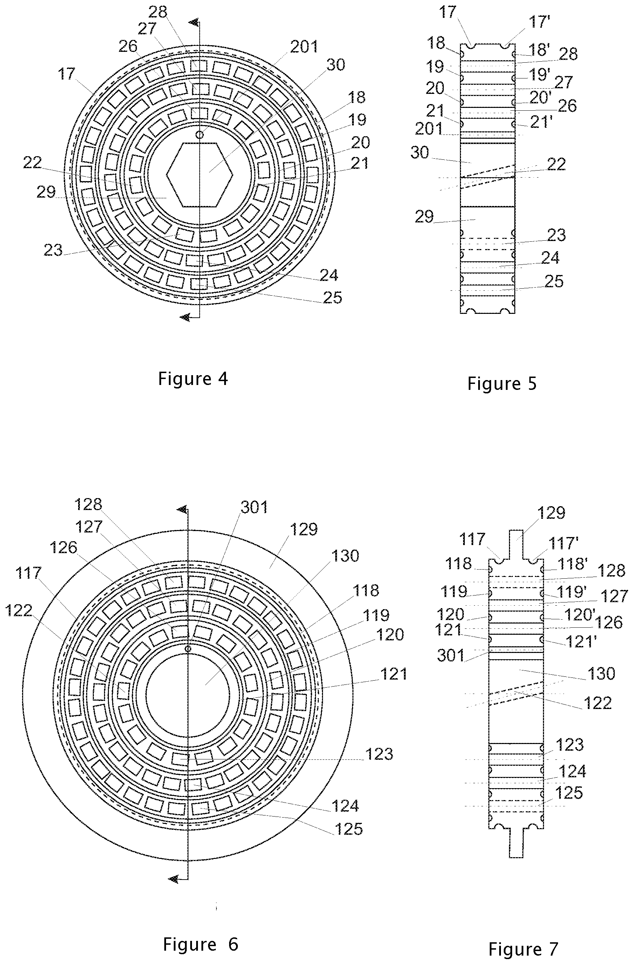

Figure 4 shows an elevation view of the exterior of a cylindrical piece, which we will call the motor rotor, detailed with the number 29.

We can see, under number 17, centered on the side of the same (29) that makes it hidden a semitoroidal opening which we will call motrix rotation bearing one.

The motor rotor (29) is crossed, in its center and coaxially therewith, by a hexagonal opening which we will call the power take-off, here designated with the number 30. At the base of the motor rotor (29), seen here, a series of semitoroidal concavities open which we will designate and know as:
With the logo 18, the upper motor supply joint channel.
With the anagram 19, the medium-high motor supply joint channel.
With the logo 20, the lower-medium motor supply joint channel.
With the anagram, 21 the lower motor supply joint channel.

A central hexagonal hole, open coaxially to the drive rotor (29), which we will call the power take-off, is reflected with the number 30.

The drive rotor (29) is crossed obliquely from base to base by three concentric series of holes, whose respective sets of separator blades will be known as the major motor turbine, the middle motor turbine and the minor motor turbine. In this graphic representation we can see some of its openings identified by the following numbers: 22, 25 and 28 of the main motor turbine, 24 and 27 of the medium motor turbine and 23 and 26 of the minor motor turbine.
- Above the power take-off (30), a cylindrical hole opens that perpendicularly connects the two bases of the motor rotor (29), which we call the motor counter and we see under sign 201.

The vertical line with arrows to the left describes the cut shown in the following figure. Figure 5 represents the right side view of the aforementioned section of a motor rotor (29) with the same designation as the previous figure, although here a new semitoroidal opening is seen which we will call motrix rotation bearing two, designated with the number 17' in its upper sector; Both motor rotation bearing are identical one (17) to the other (17') and symmetrical with respect to the motor rotor (29), having a diameter equal to that of the bearing spheres that will be described later. In the two bases of the motor rotor (29) we can see that separate channels open.driving moving joint; Those located on the left side are those seen in the previous figure, while we will call those located on the right and indicate them on their respective upper slopes as:
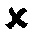 Upper motor evacuation joint channel, marked with the anagram 18'.
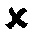 Lower-medium motor evacuation joint channel, marked with the anagram 19'.
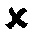 Upper-medium motor joint evacuation channel, marked with the anagram 20'.
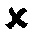 Lower motor evacuation joint channel, marked with the anagram 21'.

In this graphic representation we can see some of its openings identified by the following numbers: 22, 25 and 28 of the main drive turbine, 24 and 27 of the medium drive turbine and 23 and 26 of the minor motor turbine.

The opening (22) describes the obliquity of all of them with respect to the bases of thedrive rotor (29).

In figure 6 we see the elevation of a new rotor, atthat We will call it wheel rotor and it is designated with the anagram 129,which is identical in its physical constitution to the motor rotor (29) except for that has an external ring solidly fixed to it (129) and the power intake (30) is replaced by a cylindrical opening, which we call the opening and see with the symbol 130; Being basically the same as the motor rotor (29), the parts of the wheel rotor (129) are indicated with the same numbering as in that (29), but now adding a 1 in front of each respective figure and they are known with the same name in the that the word motor is replaced by wheel.

About the vain with the symbol 130, a cylindrical hole is opened that connects perpendicularly the two bases of the wheel rotor (129), which we call the wheel counter and we see under the symbol 301.

Figure 7 shows us the view from the right of the rotor wheel (129) sectioned by the line with arrows to the left shown in the previous figure, repeating its notation to which it adds, under number 117', a semitoroidal opening identical to the groove wheel rotation bearing one (117) and symmetrical to it with respect to the wheel rotor (129) which we will callwheel rotation bearing two;Bothwheel rotation bearing one (117) and two (117'), have a diameter equal to that of a bearing sphere which will be described later.

In the two bases of the wheel rotor (129) we can see that separate channels ofdriving moving joint; Those located on the left side are those seen in the previous figure, while we will call those located on the right and indicate them on their respective upper slopes as:
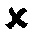 Upper evacuation wheel joint channel, marked with the anagram 118'.
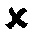 Medium lower evacuation wheel joint channel, marked with the anagram 119'.
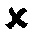 Medium high evacuation wheel joint channel, marked with the anagram 120'.
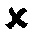 Lower evacuation wheel joint channel, marked with the anagram 121'.

In this graphic representation we can see some of its openings identified by the following numbers: 125 and 128 of the main wheel turbine, 124 and 127 of the medium wheel turbine and 123 and 126 of the minor whee turbine.

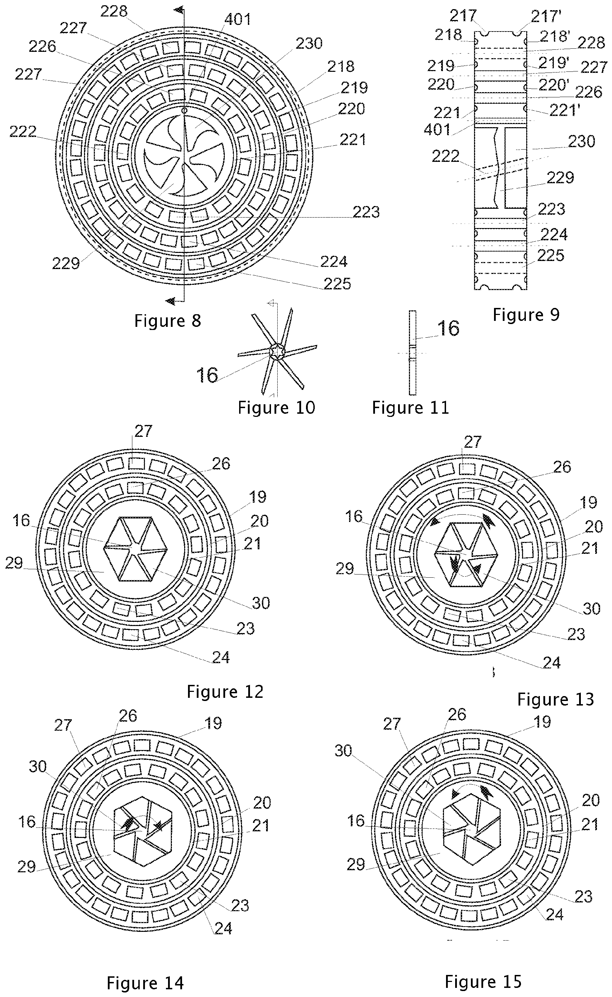

In figure 8 we see the elevation of a new rotor that is identical in its physical constitution to the wheel rotor (129), except for that does not possess the outer ring solidly fixed to it, but its center incorporates the fixed blades of a propeller, so we will know its as propeller rotor, designated with the anagram 229; The symbol 230 designates the openings between said blades, openings, which we call propeller vias.

Being also basically the same as the motor rotor (29), the parts of the propeller rotor (229) are indicated with the samenumbering as in that one (29) but adding a 2 in front of each respective figure, and they are known by the same name, respectively replacing the word motor with propeller in their name.

Above the propeller tracks (230), a cylindrical hole opens that perpendicularly connects the two bases of the propeller rotor (229), which we call the propeller counter and we see under sign 301.

Figure 9 shows us the view from the right of the propeller rotor (229) sectioned by the line with arrows to the left shown in the previous figure, repeating its notation to which it adds, under number 217', a semitoroidal opening identical to the propeller rotation bearing one (217) and symmetrical to it with respect to the propeller rotor (229) which we will call propeller rotation bearing two;both propeller rotation bearing, one (217) and two (217'), have a diameter equal to that of a bearing sphere that will be described later.

In the two bases of the propeller rotor (229) we can see that opens separate channels of motor moving joint; Those located on the left side are those seen in the previous figure, while we will call those located on the right and indicate them on their respective upper slopes as:
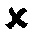 Upper evacuation propeller joint channel, marked with the anagram 218'.
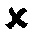 Low-medium evacuation propeller joint channel, marked with the anagram 219'.
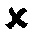 Medium-high evacuation propeller joint channel, marked with the anagram 220'.
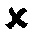 Lower evacuation propeller joint channel, marked with the anagram 221'.

In the present graphic representation we can see some of its openings identified by the following numbers: 225 and 228 of the major motor turbine, 224 and 227 of the medium motor turbine and 223 and 226 of the minor motor turbine.

Figure 10 is the external elevation drawing of a pinion, which we thus name under the designation 16; The same (16) has a rigid cylindrical center open on its central axis by a six-point star gear; It also has, surrounding the center of the cylinder and forming a single immovable piece with it (16), six teeth made of resistant and flexible material, the length of which is adequate for the pinion (16) to fit completely into the power take-off (30). ), as will be seen in figures 12, 13, 14 and 15.

Figure 11 represents the profile of the pinion (16) with the same designation as the previous figure.

Figure 12 shows the view of a section of the motor rotor (29) seen in Figure 4 in which the medium-high supply motor joint channel (19) has been removed from the external edge; Following the denominations and signs of said figure, herein, inside the power take-off (30) it has been installeda pinion (16).

Figures 13, 14 and 15 are repetition of the previous one, except for the respective arrows drawn on each one of them; The reason for this reiteration of images and diversity of arrows will be argued in explanation.

Figure 16 shows a rigid sphere that is called a sphere and designated as 89; The sphere (89) is of the same diameter as the grooves offixed bearing in supply and evacuation (6 and 06), motor rotor (17 and 17'),wheel rotor (117 and 117') and propeller rotor (217 and 217').

Figure 17 represents the elevation view of an O-ring, to whichWe will now generically call it a joint under the also generic designation of number 88; joint (88), that is capable of contain the escape of fluid between the two bodies that contain it.

Figure 18 represents the profile view of said joint under the same designation.

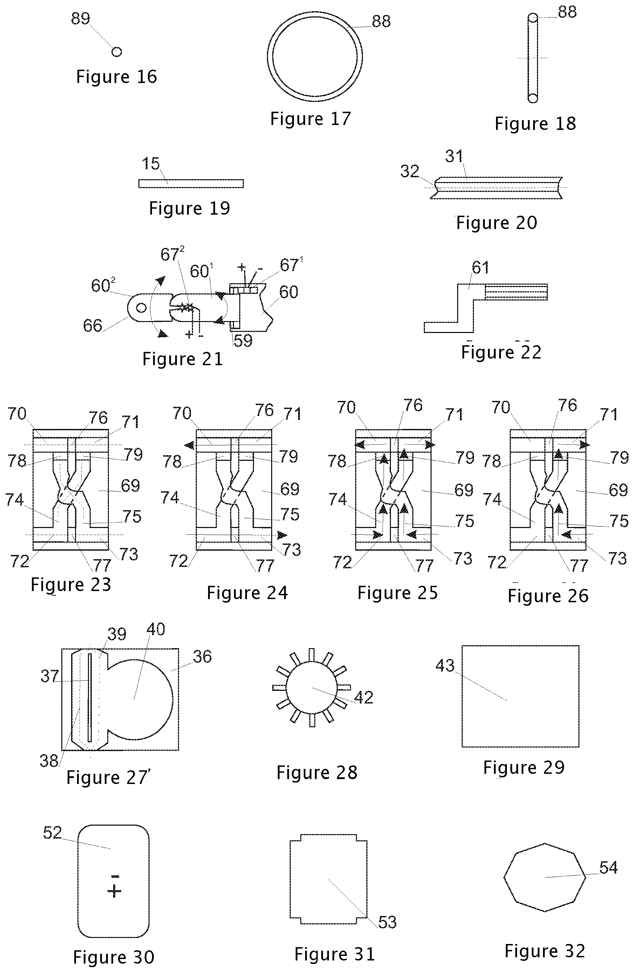

Figure 19 is the profile drawing of a cylindrical threaded connection element, which we will generically call anchor and is designated here with the number 15; The anchor (15) will be responsible for firm and immobile fixation between two casings: one for supply (0) and the other for evacuation (00), so it will have the same threading profile as the respectives evacuation casing coupling (012, 013. and 014) and the supplies ones (12, 13 and 14) of these (0 and 00); In addition, it will also link both (0) and (00) firmly and stably with the structure of the vehicle they serve. Given its profuse repetition in this description, in its particular designation the number 15 will be used, to which another figure will be attached, in subscript and superscript, depending on the case, as will be seen.

Figure 20 shows the elevation of a pressure-resistant hydraulic fluid communication sleeve, which can be rigid or flexible at will; It is known as a sleeve and designated with the number 31, its channel having the sign 32; The conduit (31) is capable of communicating through either of its two mouths, while maintaining tightness with the outside, to the different elements that constitute the hydraulic system claimed here.

Figure 21 is the drawing of the vertical diametral section of a rotating ball joint device formed by:
(a) The vehicle, which we will call like this and indicate with the number 60; It (60) has a cylindrical hole open on its right side, which is firmly closed by a ring, which we will thus know under the designation of the number 59 on its lower side.

In addition, the vehicle has installed, in the area that we see, an electric motor marked with the number 67¹ whom we call director, wich (67¹) is equipped with a transmission gear whose blades are located in the open space between the vehicle (60) and the ring (59); At the end of their terminals you can see the signs of their respective polarities.
(b) A cylinder of rigid material, which we call the orientator and indicate with the number 60¹, which has a gear on its right end equal to that of the director (67¹).

Furthermore, the orientator (60¹), has an electric motor installed that we call elevator designed by 67²; At the end of their terminals you can see the signs of their respective polarities.

At its left end, its base is rounded, ending in a semisphere.
(c) A rigid bond, which we know as a bond under the number 60²; It is made up of two prismatic bars that form a single body, one larger, on the left, and the other smaller, on the right.

The left end of the largest bar is rounded convex and, near it, a cylindrical hole opens in which it is possible to assemble the anchor (15); On its right side, it has a profile that is also rounded, although this time concave, with the same radius of concavity as that of the aforementioned hemisphere for the orientator (60¹).

From the center of said concavity, a smaller bar emerges, which has a fixed gear at its final end, equal to that of the elevator (67²) in which it fits.

The arrow that appears on the link (60²) indicates the possibility of pivoting it with respect to the orientator (60¹) by action ofelevator (67²).

The arrow on the guide (60¹) indicates the possibility of pivoting thereof with respect to the vehicle (60) due to the action of thedirector (67¹).

Figure 22 is the elevation of a pedal, which we know as such, here under designation 61; At its right end you can see the six-point star gear that fits into the pinion gear (16) already mentioned.

Figures 23, 24, 25, and 26 represent the elevation of a parallelepiped ofrigid, compact and pressure-resistant material that we know as inverter with the sign 69. The body of the inverter (69) is crossed from side to side by two parallel ducts, orthogonal to the walls of the inverter (69).

Both conduits are subdivided by solenoid valves installed in their respective centers, which will be detailed below, so that each sector of said conduits will be known as:
- Upper right channel, the one located above and to the right of the inverter (69) and indicated with the number 70.
- Upper left channel the one located above and to the left of the inverter (69) and indicated with the number 71.
- Lower right channel to the one located below and to the right of the inverter (69) and indicated with the number 72.
- Lower left channel to the one located below and to the left of the inverter (69) and indicated with the number 73.

Upper right channel (70) and lower left channel (75) are interconnected by a pipe, which we will call pipe a with designation 74, which (74) passon another pipe, which we will call pipe b indicated with sign 75, which connects the lower right channel (72) with the upper left channel (71); both pipes: a (74) and b (75) do not haveany connection between the two.

The mouths of the upper channel (70) and the lower channel (71), as already noted, are both connectable to the end of a hydraulic sleeve (31), maintaining firm tightness in their respective contacts and joining their channel to (70). ) or its channel b (71) with the channel (32) of the hydraulic sleeve (31) attached to it.

The inverter (69) has thefollowing solenoid valves:
■ Designated with the number 76, the upper valve, installed between the upper right channel (70) and the upper left channel (71).
■ Designated with the number 77, the lower valve, installed between the lower right channel (72) and the lower left channel (73).
■ Designated with the number 78, the reversing valve a, installed inside the pipe a (74).
■ Designated with the number 79, the reversing valve b, installed inside the pipe b (75).

The difference between figures 21, 22 and 23 will be argued later in the explanation.

Figure 27 shows the elevation of a body made of rigid, compact and electro-insulating material, which we know as a generator/motor under designation 36, which has open:
→ Two ducts, parallel to each other that cross it from side to side, which we will call respectively as free passage, detailed with the sign 38, and energetic passage which is with 39; between both (38) and (39), the sign 37 shows a separating wall, the generator (36), which we will thus know; This (37) has a length such that it gives way through its upper and lower ends so that they communicatebetween the free passage (38) and the energetic passage (39), converging in both places in a single opening.
→ A blind cylindrical hole, open only at the base seen here, which we call rotation cavity, designated here under the designation 40.

The energetic passage (39) communicates tangentially to the rotation cavity (40) with outside.

Figure 28 reflects an element, which we know as an inductor designated with the sign 42, which is constituteda rigid and dense disk, which has a series of radial vanes of equal thickness forming a single body with it (42); These palettes are dense, rigid and magnetized, maintaining homogeneity in their particular magnetic fields, so that their respective most radial poles coincide in sign.

The total diameter of the inductor (42) It is the same as that of the rotation cavity (40), so that it can rotate in it while maintaining tightness in its mutual contact areas.

Figure 29 is the elevation of a lid, a rigid and dense parallelepiped, intended to cover the rotation cavity (40), closing it hermetically; We call it tapa and indicate it with the sign 43.

Figure 30 is the elevation of an electric battery, on which we see its two poles indicated with the respective+ and - signs; It will be known as the battery and designated with the number 52.

Figure 31 represents the elevation of a multitasking electronic control device that we call control under the designation 53.

Figure 32 shows us the elevation of a interactive screen of electromagnetic data management which we call manager and We designate it with the symbol 54.

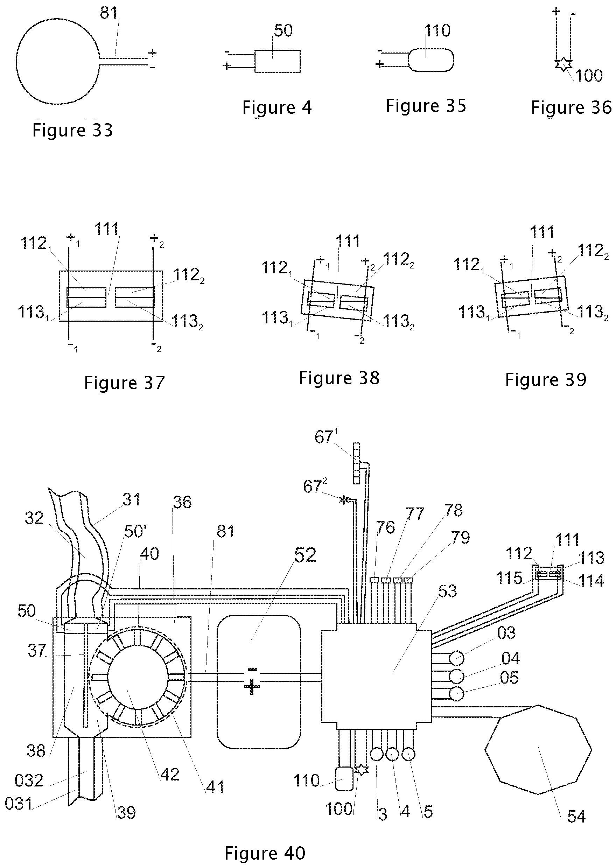

Figure 33 shows the elevation drawing of an electric coil, which we will call induced with designation 41; At the end of their terminals you can see the signs of their respective polarities.

Figure 34 shows the elevation of an adjustable flow solenoid valve, which we will generically call a regulator, here under symbol 50; At the end of their terminals you can see the signs of their respective polarities.

Figure 35 shows the elevation of a photoelectric cell, as we will call it and see here with the sign 100; At the end of their terminals you can see the signs of their respective polarities.

Figure 36 shows the elevation of an electric light bulb, which we will call the bulb and we see here with the number 110; At the end of their terminals you can see the signs of their respective polarities.

Figure 37 describes the horizontal elevation of an electronic level, which forms a fixed part of the body of the vehicle in which it is installed, consisting of a rigid, compact and electro-insulating parallelepiped, which we will call level with designation 111, which It has two open spaces in its body without any opening to the outside.

The body of the level (111) is crossed by four vertical electrical conductors, each designated at its ends with its own electrical polarity.

The interior of these spaces contains the amount of dielectric liquid required to fill it up to half.

At the bottom of both containers, the dielectric housed there is marked respectively with the numbers 113₁ and 113₂ while the respective upper gas chambers are with 112₁and112₂.

Figure 38 repeats the previous one but, now, the level (111) is inclined to the right with the consequences that will be detailed in the explanation.

Figure 39 repeats the previous one but, now, the level (111) is inclined to the left with the consequences that will be detailed in the explanation.

Figure 40 represents the elevation of the entire electrical device, with its electrical interconnections, typical of the system claimed here; Its parts and components, already particularly detailed in previous figures, follow the same symbology here, and are:
The generator/motor (36), which permanently integrates the induced (41) into its rotation cavity wall (40), thus constituting its stator; In it (40) it is housed with rotation capacity the inductor (42).

It should be said here that the rotating cavity (40) so arranged it isisolated from the outside by the cover (43) permanently.

Inside the upper beginning of the free passage (38), a passage regulator (50) is installed, which we now call the free passage regulator to differentiate it from its twin, located at the upper beginning of the energetic passage (39), which we will call here energetic passage regulator under symbol 50'.

A sleeve (31) is seen connected, and sealing with the outside, to the upper part of the generator/motor (36) so that its channel (32) flows into the free (38) and energetic (39 )passages; here we will call it the arrival sleeve.

A second sleeve, now designated as 031, is connected, sealing with the outside, to the lower part of the generator/motor (36) so that its channel, now seen with designation 032, flows into the free passages (38) andenergetic (39); here we will call it the outlet sleeve.

A battery (52), in electrical connection with the generator/motor (36) and with the control (53).

A control, in electrical communication with:
An electronic level (111), with its dielectric chambers (1131and1132) and gaseouses (1121and1122).

A manager (54).

The motor casing lower supply solenoid valves (3),average (4) andhigh (5).

The solenoid valves of supply casing, either wheel or propeller, low (03), medium (04) an dhigh (05).

A light bulb (100).

A photoelectric cell (110).

The upper valve (76).

The lower valve (77).

The reversing valve a (78).

The reversing valve b (79).

The free passage regulator (50).

The energetic passage regulator (50').

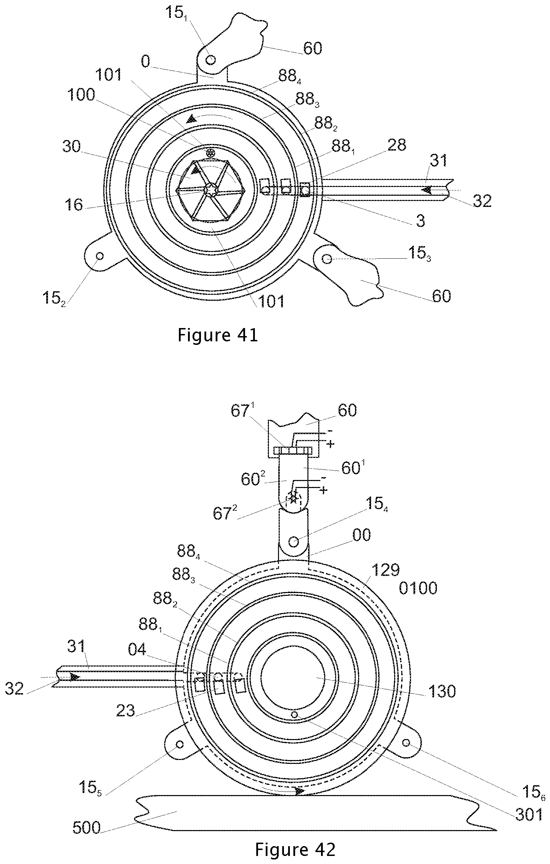

Figure 41 is the elevation drawing of an assembly that includes a supply casing now designated with the number 0, within which (1) is located amotor rotor (29) that has a pinion (16) installed in its power intake (30).

Among its solenoid valves (0), the low one (3) is indicated.

It is specified with the already established designation followed by a subindex number: A section of the main motor turbine (28) also appears in the figure.

Three anchors listed as: 151the one above, 152 the one on the bottom left and 153 the one at the bottom right.

It is specified with the already established designation followed by a subindex number: A section of the main motor turbine (28) also appears in the figure.

Three anchors listed as: 15₁ the one above, 15₂ the one on the bottom left and 15₃ the one at the bottom right.

Trio (15₁, 15₂ and 15₃), which constitutes the firm and stable mooring of the supply casing (0) with three sections of the vehicle, detailed respectively with the numbers 60₁, 60₂ and 60₃.

A section of the section of a sleeve (31) with its channel (32).

A light bulb (100), installed in the supply casing counter (101), can be seen through the motor counter (201), since the angle of rotation of the latter (201) makes its opening coincide with that (100).

As a result of the introduction of the motor rotor (29) into the sinus (01) of the evacuation casing (00), four toroidal gaps appear created by the confrontation of their respective joint channels; In each of them there is a meeting, called and designated as follows:
∘ The high evacuation joint, designated on its lower slope with the number 814', which fills the toroidal gap created by the confrontation of the high evacuation static joint channel (07) and the upper evacuation motor joint channel (18').
∘ The upper middle evacuation board, designatedon its lower slope with the number 81₃', which fills the toroidal gap created by the confrontation of the medium-high evacuation static j oint channel (08) and the upper drive j oint channel (219').
∘ The lower middle evacuation board, designatedon its lower slope with the number 81₂', which fills the toroidal gap created by the confrontation of the medium-low evacuation static joint channel (09) and the upper drive joint channel (20').
∘ The lower evacuation board, designatedon its lower slope with the number 81_{1'}, which fills the toroidal gap created by the confrontation of the medium-high evacuation static joint channel (10) and the upper drive joint channel (21).

The whole is joined in a firm and stable way by three anchores, of which only the upper one is visible (155), so that the supply casing (0) and the evacuation (001) are traversed by it (158) and host (01 and 001) to a motor rotor (29) in their respective sinuses (1 and 01).

Figure 42 is the elevation drawing corresponding to the assembly of a evacuation casing (00) within which (01) it's partially located a wheel rotor (129) , since its ring protrudes from it (00).

In the figure you can see:
The casing evacuation (00).

Its medium outlet (04).

A sleeve section (31), which is adjacent to the section seen in the previous figure, with its channel (32).

The four joints already alleged in the previous figure, which, being identical in each category, coincide in their numbering with the already established.

A vain of the main motor turbine (28).

The three anchors: 15₄ the one above, 15₅ the one on the bottom left and 15₆ the one at the bottom right.

Trio (15₄, 15₅ and 15₆), which constitutes the firm and stable anchoring of the evacuation casing (00) with three sections of the vehicle, detailed respectively with the numbers 60₁',60₂' and 60₃'.

You can see the wheel counter (301), through which no light source can be seen, since the angle of rotation of the wheel rotor (129) means that it (301) does not coincide in its opening with the lighting device or sensor installed in the evacuation casing counter (0101).

With the number 500 you can see the ground on which the rotor wheel (129) rests.

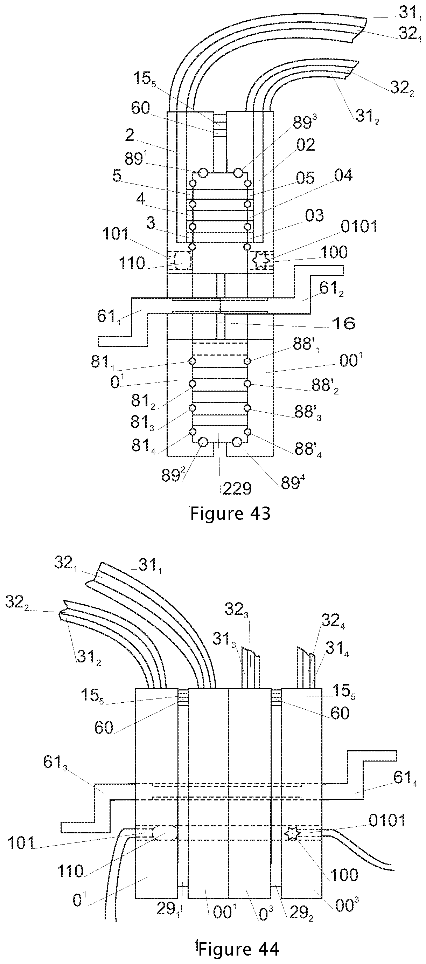

Figure 43 is the profile representation of the diametral section of a complete motor device formed by:
∘ A supply casing (0¹) in which they are seen:
   ∘ Its supply duct (2).
   ∘ Its low (3), medium (4) and high (5) solenoid valves.
   ∘ A sensor (110), located in the supply casing counter (101).
   ∘ A motor rotor (29).
   ∘ An evacuation casing (00) in which you can see:
      ∘ Its evacuation duct (02).
      ∘ its low (03), medium (04) and high (05) outputs.
      ∘ A light bulb (100), located in the evacuation casing counter (0101).
      ∘ Two spheres, designated respectively with the numbers 89¹ and 89², which are part of a set of them that fill the toroidal gap created by the confrontation of the supply bearing channel (6) and the motrix rotation bearing one (17) appeared for the purpose of the introduction of the motor rotor (29 ) in the sinus (01) the evacuation casing (00¹).
      ∘ Two spheres, designated respectively with the numbers 89³ and 89⁴, which are part of a set of them that fill the toroidal gap created by the confrontation of the evacuation bearing channel (06) and the Motrix rotation bearing two (17') appeared by the introduction of the motor rotor ( 29) in the sinus (01) the evacuation casing (00¹). Due to the introduction of the motor rotor (29) into the sinus (1), the fsupllly casing (01), four toroidal gaps appear created by the confrontation of their respective joint channels; In each of them there is ajoint, called and designated as follows:
      ∘ The high supply joint, designatedon its lower slope with the number 81₄, which fills the high supply static joint channel
      ∘ (7) and the Upper motor supply joint channel (18).
      ∘ The upper middle supply joint, designatedon its lower slope with the number 883, which fills the medium-high supply static joint channel (8) and the Lower-medium motor evacuation joint channel (19).
      ∘ The lower middle supply joint, designatedon its lower slope with the number 882, which fills the low-medium static supply joint channel (9) and the lower-medium motor supply joint channel (20).
      ∘ The upper middle supply joint, designated on its lower slope with the number 881, which fills the low supply static joint channel (10) and the lower motor supply joint channel (21).

As a result of the introduction of the motor rotor (29) into the sinus (01) of the evacuation casing (00), four toroidal gaps appear created by the confrontation of their respective joint channels; In each of them there is a joint, called and designated as follows:
∘ The high evacuation joint, designated on its lower slope with the number 88₄, which fills the toroidal gap created by the confrontation of the high evacuation static joint channel (07) and the Upper motor evacuation joint channel (18').
∘ The upper middle evacuation joint, designated on its lower slope with the number 883, which fills the toroidal gap created by the confrontation of the medium-high evacuation static joint channel (08) and the Low-medium evacuation motor joint channel (219').
∘ The lower middle evacuation joint, designated on its lower slope with the number 882', which fills the toroidal gap created by the confrontation of the medium-low evacuation static joint channel (09) and the upper motor joint channel (220').
∘ The lower evacuation joint, designated on its lower slope with the number 88₁', which fills the toroidal gap created by the confrontation of the medium-high evacuation static joint channel (10) and the upper motor joint channel (21).

The whole is joined in a firm and stable way by three anchors, of which only the upper one is visible (15₅), so that the supply casing (0) and the evacuation (00¹) one are crossed by it (15₅) and host (0¹ and 00¹) to a motor rotor (29) in their respective sinuses (1 and 01).

The motor rotor (29) is here occupied by a pinion, hidden for graphic clarity, which is crosed by the pedals ( 61₁ and 61₂) that are firmly installed there.

It can be seen how the whole is also fixed by the anchor (15₅) to the vehicle (60) in a section thereof.

In addition, it is connected, maintaining tightness with the exterior at its junction:
A sleeve section (31₁) with its channel (32₁) to its supply duct (2).

A sleeve section (31₂) with its channel (32₂)To its evacuation duct (02).

Figure 44 represents the external profile of a motor device resulting from the combination of two complete motor devices; The whole is joined firmly and stably by three anchors, of which only the upper one is visible (15₈), so that their respective supply casing (0¹ and 0³) and evacuation ones (00¹and 00³) are crossed by it (15₈) and host (0¹ and 00¹) and (0³ and 00³) aligned both motor rotors (29₁ and 29₂).

It can be seen how the whole is also anchored by the bond (15₈) to the vehicle (60) in two sections thereof.

Thus, the evacuation casing (00¹) of the left most element is attached to the supply one (0³) of the one located on the right, their respective casing vias being aligned, which are not seen here, so the respective power take-offs of the motor rotors are also sucesives (29₁ and 29₂), here occupied by their respective pinions, hidden for graphic clarity, which are crosed by the pedals ( 61₃ and61₄) that are firmly installed there. You can also see a light bulb (100), located in the counter (0101) of the evacuation casing (00³), and a sensor (110), located in the counter (101) of the supply casing (0¹).

It also has connections, maintaining tightness with the exterior at its junction:
To its supply line (2), a sleeve section (31₁) with its channel (32₁).

To its evacuation duct (02), a sleeve section (31₂) with its channel (32₂).

Both are a continuation of the sleeves seen in the previous figure with the same numbering.

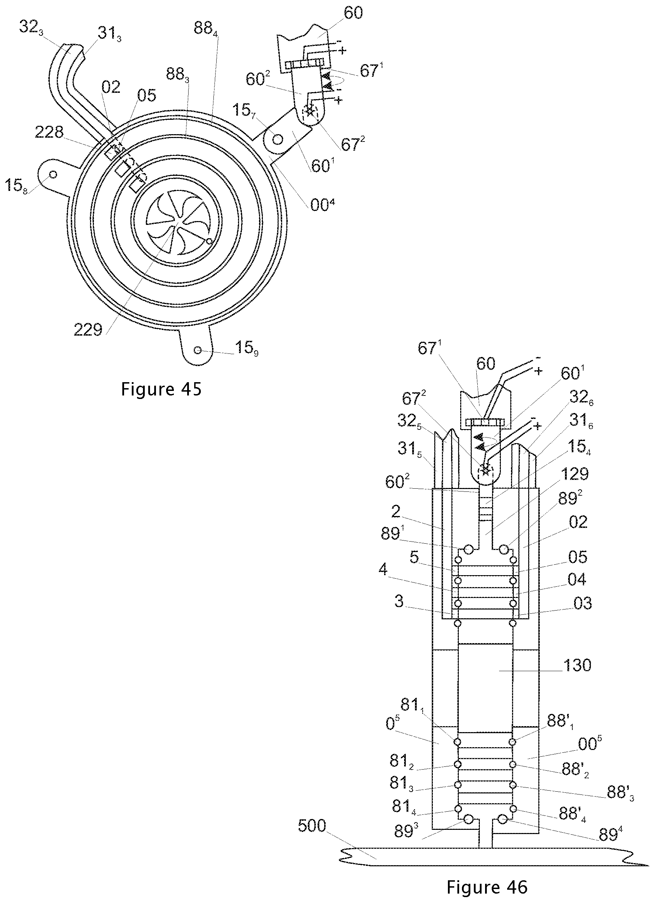

Figure 45 corresponds to the external elevation of a complete propeller device, excepting by reasons of graphic clarity, its casing and supply duct.

The assembly formed by the supply casing and the evacuation one, that now has a 00⁴ sign, It is firmly and stably joined by three anchors, to which the numbers 15₇, 15₈ and 15₉ designate respectively , so that both casings house a propeller rotor (229) with the capacity to rotate in their respective sinuses.

The upper right anchor (15₇) fixes the supply casing and evacuation one (00⁴) to the orientator (60¹), while the bond (60²) joins this one (60¹) with the vehicle (60), so that the propeller device can be oriented in any direction for discretionary use by the pilot of the aircraft, ship or multipurpose vehicle, as appropriate, of the director (67¹) and/or the elevator (67²).

The evacuation casing (00) is seen, which incorporates a propeller rotor (229) in its sinus (01) so the second (01) is hidden by this (229); In addition, its upper outlet (05) and the evacuation duct (02) are marked.which has at its exit to the outside connected, maintaining tightness with the surrounding medium, a section of sleeve (31₃) so that its channel (32₃) is an extension of that (02).

You can see the different joints with the same symbols used until now.

Figure 46 is the view of a diametrical section of a complete wheel device formed by:
∘ A supply casing (0⁵) in which they are seen:
   ∘ Its supply duct (2).
   ∘ Its low (3), medium (4) and high (5) solenoid valves.
   ∘ a wheel rotor (129).
   ∘ An evacuation casing (00⁵) in which they are seen:
      ∘ Its evacuation duct (02).
      ∘ Its low (03), medium (04) and high (05) outlets.
      ∘ Two spheres, designated respectively with the numbers 89¹ and 89³, which are part of a set of them that fill the toroidal gap created by the confrontation of the supply bearing channel (6) and the wheel rotation bearing one (117) that appeared as a result of the introduction of the wheel rotor (129). ) in the sinus (01) of the supply casing (0⁵).
      ∘ Two spheres, designated respectively with the numbers 89² and 89⁴, which are part of a set of them that fill the toroidal gap created by the confrontation of the evacuation bearing channel (06) and the wheel rotation bearing two (117') appeared as a result of the introduction of the wheel rotor (129) inside (01) the evacuation casing (00⁵). Due to the introduction of the wheel rotor (129) in the supply casing (0) sinus (1), four toroidal gaps appear created by the confrontation of their respective joint channels; In each of them there is a joint, called and designated as follows:
      ∘ The high supply joint, designated on its lower slope with the number 88₄, which fills the high supply static joint channel (7) and the upper supply wheel joint channel (118).
      ∘ The upper middle supply joint, designated on its lower slope with the number 88₃, which fills the medium-high supply static joint channel (8) and the medium-high supply wheel joint channel (119).
      ∘ The lower middle supply joint, designatedon its lower slope with the number 88₂, which fills the medium-high supply static joint channel (9) and the medium-low supply wheel joint channel (120).
      ° The upper middle supply channel, designated on its lower slope with the number 88₁, which fills the low supply static joint channel (10) and the low supply wheel joint channel (121).

As a result of the introduction of the wheel rotor (129) into the sinus (01) of the evacuation casing (00), four toroidal gaps appear created by the confrontation of their respective joint channels; In each of them there is a joint, called and designated as follows:
∘ The high evacuation joint, designated on its lower slope with the number 88₄', which fills the toroidal gap created by the confrontation of the high evacuation static joint channel (07) and the upper evacuation wheel joint channel (118').
∘ The upper middle evacuation joint, designated on its lower slope with the number 88₃', which fills the toroidal gap created by the confrontation of the medium-high evacuation static joint channel (08) and the upper wheel joint channel (119').
∘ The lower middle evacuation joint, designated on its lower slope with the number 88₂', which fills the toroidal gap created by the confrontation of the medium-low evacuation static joimt channel (09) and the upper wheel joint channel (220').
∘ The lower evacuation joint, designated on its lower slope with the number 88₁', which fills the toroidal gap created by the confrontation of the medium-high evacuation static joint channel (10) and the upper wheel joint channel (121).

The whole is joined in a firm and stable way by three anchors, of which only the upper one is visible (15₄), so that the supply casing (0⁵) and the evacuation one (00⁵) are crossed by it (15₈) and host (0⁵ and 00⁵) a rotor wheel (229) in its respective sinuses (1 and 01).

It can be seen how the whole is also anchored by the anchor (15₅) to the vehicle (60) in a section there of, as do the remaining two anchors.

In addition, it is connected, maintaining tightness with the exterior at its junction:
To its supply duct (2), a sleeve section (31₅) with its channel (32₅).

To its evacuation duct (02), a sleeve section (31₆) with its channel (32₆).

With the number 500 you can see the ground on which the rotor wheel (129) rests.

The top anchor, now designated 15₄, fixes the vehicle (60) to the supply casings and the evacuation one, seen here with respective symbols 0⁵ and 00⁵, interspersing the orientator (60¹) between them , while the bond (60²) joins them both (60 and 60¹) so that the wheel device can be oriented in any direction at the discretionary use by the pilot of the aircraft, ship or multipurpose vehicle, as appropriate, using director (67¹) or the elevator (67²).

Based on this, we will understand the eelectro-mechanical structure installed in a vehicle intended for the hydraulic transmission of energy through a closed round trip circuit, filled with fluid oleo-hydraulic, of a impeller force applied on a rotating motor device, which is fixed in the vehicle in which it is installed a transfer device of said force, which provides the advancement of the vehicle (60) in question, whether it is a device wheel (129), if it is a land vehicle, or a device propeller (229), if it is air or sea, and both (129 and 229) if it is a multipurpose transport.

The motor element, the wheel and propeller ones have basically the same physical structure, differing, as can be seen in the figures, in that the motor element incorporates a pinion (16) to which pedals (61) or a motor are circumstantially geared, the wheel incorporates a ring to its rotor (129) that allows it to rest and propel itself against the ground, and the propeller incorporates its own (229), some blades that compressed behind them the liquid or air fluid that surrounds them.

The device motor, which can be nourished in its rotation by the energy applied thanks to the push of the legs of a cyclist on some pedals (61 and 61') of a bicycle, which will require the appropriate location of these (61 and 61') in the vehicle for effective pedaling, or by any type of motor adapted to said primary focus, so the location of the driving element will depend on the transport in question.

Being equal in this aspect, the location and ability to rotate properly of the motor rotors (29), wheel (129) and propeller (229) in their afore mentioned location, are given by two series of spheres (89¹- 89³ and 89²- 89⁴) which direct and separate them at a distance from their respective casings (0 and 00) that allows the sealing action of the two sets of joints located between the three elements as seen in figures 43 and 46.

As seen in Figure 13, the motor rotor (29) has the pinion (16) installed in its power take-off (30) in such a way that, when it rotates (16) counterclockwise its teeth contact, without possibility of flexion, against the vertex of the power take-off (30) and therefore the motor rotor (29) rotates under its thrust in its direction; On the other hand, as seen in Figure 14, when the pedals are rotated clockwise, the teeth (16) bend, sliding on the walls of the power take-off (30), so the motor rotor (29) remains static.

The same occurs, as shown in Figure 15, if there is a faster rotation of the motor rotor (29) than the one of pinion (16) due to the slowing or stopping of pedaling with respect to the hydraulic traffic within it (29). , as occurs when the wheel rotor (129) rotates faster during descent of a slope or the propeller rotor (229) of an aircraft during its descent in mid-flight.

Thus, each of said devices are made up of a container made up of two casings: one for supply and the other for evacuation (00); As we know, the first (0) has after its supply duct (2), three solenoid valves: the low one (3), the medium one (4) and the high one (5), while the second one (00), after its evacuation duct (02) has the outlets low (03), medium (04) and high (05).

In each of the three cases, as both casings (0 and 00) are joined by the anchors (15) presenting the confrontation of their respective sinuses (1) and (01),by inserting into the corresponding gasket channels, static or mobile, he joint (88) that fits into it, three spaces supply and three evacuation are created: the upper, the middle and the lower. Furthermore, the drive rotors (29), wheel (129) and propeller (229) inserted in each of the cases just mentioned between both casings (0 and 00) have open turbines, respectively, with their blades located at different radii and obliquely to the bases of the disk that incorporates them; these are:
The main motor turbine (22, 25 and 28 in figures 4 and 5), which communicates the upper supply space with the upper evacuation space.

The medium motor turbine (24 and 27 in figures 4 and 5), which communicates the medium supply space with the medium evacuation space.

The minor motor turbine (23 and 26 in Figures 4 and 5), which communicates the lower supply space with the lower evacuation space.

The main wheel turbine (122, 125 and 128 in Figures 6 and 7), which communicates the upper supply space with the upper evacuation space.

The middle wheel turbine (124 and 127 in Figures 6 and 7), which communicates the middle supply space with the middle evacuation space.

The minor wheel turbine (123 and 126 in Figures 6 and 7), which communicates the lower supply space with the lower evacuation space.

The main propeller turbine (222, 225 and 228 in figures 8 and 9), which communicates the upper fsupply space with the upper evacuation space.

The middle-propeller turbine (224 and 227 in figures 8 and 9), which communicates the middle supply space with the middle evacuation space.

The minor propeller turbine (223 and 226 in figures 8 and 9), which communicates the lower supply space with the lower evacuation space.

As the motor device seen in figure 41 has its supply duct (2) connected, through the sleeve (31), to the evacuation duct (02) of the wheel device presented in figure 42, just as the first one has its evacuation duct connected to the supply of the second, by means of a hose similar to that (31) located behind it (31) in said images, the closed hydraulic circuit indicated at the beginning is created, being the solenoid valves of both supply casing, motor and wheel, those responsible for allowing flow circulation through of one or another of their respective turbines, so the control (53), to which all the solenoid valves are connected, is responsible for opening only one of them in the motor device, whichever one it is among the three, and another unique one among its trio in the wheel device; discretionary choice by the conductor from the manager (54),since this one (54) is control that one (53) capable.

From the above it follows that there will be nine different combinations in opening and closing between the solenoid valves of the motor device and the wheel device, which offers the possibility of applying the same number of developments in the wheel reception of the power applied in the motor device, since The three turbines of each device have a different particular diameter and, therefore, a different relative volume displaced by rotation of the rotor in each of said links.

The same occurs when the linked ones are, under the same structure, the driving device and the propeller.

As seen in figure 44, a multiple configuration can be established in the motor device, so that as many motor devices are joined in parallel, their respective pinions sharing a single focus of rotation (61₃ and 61₄),such as wheel or propeller devices want to be installed on the vehicle, maintaining the afore mentioned developments and increasing, proportionally to the oleo-hydraulic fluid receivers, its emission.

Variant, which manages to multiply the number of tractor wheels of a land vehicle, propellers in aircraft and ship or both in hybrid vehicles of the previous ones.

The system explained so far requires an electronic control system, reflected in Figure 40, which incorporates an electrical source that is an electric battery (52), which initially provides, to a stationary vehicle, such a source; but, to said hydraulic circuit, an electric generator-motor (36) capable of producing electrical energy can be inserted at any point of one of its sleeves (31), capable of producing electrical energy due to the powerful rotation of any one of its rotors (29, 129 or 229), since any of its turbines push the oleo-hydraulic fluid in its rotation, communicating the electricity generated to the battery (52) for simultaneous, subsequent or reserve use.

Furthermore, the generator-motor (36), due to its injecting capacity of the oleo-hydraulic fluid that circumstantially passes through it as will be seen below, is suitable, when supplied with electric current from this one (52), to feed the battery ( 52) epropel the vehicle in aid or replacement of the aforementioned primary rotary source of the driving element.

Since the generator-motor (36) has, as seen in figure 40, an inductor (42) capable of rotating near an induced (41) that surrounds it, creating a variation in the magnetic field exerted by the first (42) on the second (41) and, once this one (42) is contained in that one (36), the rotation cavity (40) is isolated with a cover (43), giving it (43) tightness with the outside, thanks to the connection of its energetic (39) and free (38) passages with the hydraulic circuit presented here by means of two sleeve sections (31 and 031), the oleo-hydraulic flow can be directed in its traffic by these (39 and 38) by means of the electrical calibration of the respective flow rate transferred to one (38) by one regulator (50) and to another (39) by other regulator (50') that respectively their own.

Said optional discrimination by the conductor of the vehicle is carried out electronically from the manager (54) through the control (53), and allows sending: The entire flow through the energetic passage (39), thereby obtaining the maximum generative force, with a high plus of resistance on the motor action.

The discretionary distribution of flows between the energetic (39) and free (38) passages, thereby obtaining more or less electric current, with its consequent increase in resistance, as already indicated.

All the flow through the free passage (38), thus no generative force is obtained, with a total absence of said resistance on the motor action.

The hydraulic circulation seen until now occurs in only one direction; However, the hydraulic system presented here has interspersed in its sleeves (31) back and forth between the motor rotor and the wheel or propeller rotor depending the assembly in question an electronic traffic inverter (69) inside with the following operating system: When its upper (76) and lower (77) valves are open and the reversing valves a (78) and b (79) are closed to, as seen in figure 24, the traffic in the circuit is as seen until now and, when the pedal (61) rolls in the driving direction, the wheel or propeller in question rotates forward.

When its upper (76) and lower (77) valves are closed and the reversing valves a (78) and b (79) are open, as seen in figure 25, the traffic in the circuitIt is reversed and, when the pedal (61) is rolled in the driving direction, the wheel or propeller in question rotates in reverse.

In the event that the system has the generator/motor (36) inserted in the return or return duct that connects the wheel or propeller device with the inverter (69), the closure of its upper (76), lower (77) and reversing a valves (78) and opening of the inversing b (79), as seen in Figure 26, supposes that the traffic in the circuit is limited to the generator/motor (36) and the wheel or propeller device, leaving the motor device outside the circuit. This is produced automatically by the control (53) in the event that the electronic level (111), which is explained below, detects a situation of descent of the vehicle, which can be used for the transformation of the potential energy into electrical energy by the generator. /engine (36).

Electronic level (111) which, as seen in figure 37, is based on the existence of a dielectric liquid that fills respectively two chambers up to half , creating in each of them:
A lower part (113₁and 113₂) electro conductive, dense and fluid.

A superior one (112₁and 112₂) dry, gaseous and electro-insulating.

In said figure, the vehicle to which the level (111) is installed is horizontal and, consequently, the surface of both electro-conductive volumes (113₁ and 113₂) remains stable in that condition; This implies that the internal ends of the two electrical conductors (-₁ and -₂) housed in the lower parts (113₁ and 113₂) are bathed with dielectric, while the two electrical conductors (+₁ and +₂) housed in the upper chambers (112₁ and 112₂), being surrounded by said gas, they are electrically isolated from them (-1 and -2), so there is no electrical circulation between the electrodes (-₁ and +₁) and (-₂ and +₂) and no signal reaches the control (53) so it (53) does not process any action on the electrical system.

The ascent of a slope by a land vehicle or the ascent in height of aaircraft that carry the level described here implies, as Figure 38 shows, that the vehicle to which the level (111) is installed is no longer horizontal, so the surface of both electro-conductive volumes (113₁and 113₂) lose this condition; in the left part of the level (111), theelectro-conductive volume (113₁) adopts the shape of a wedge, with its minor vertex on the left; This implies thatthe two internal ends of the electrical conductors (+₁and -₁) housed there they remain electro-isolated, without emitting any signal to the control (53); while, to the right of it (111), the two electrical conductors (+₂and -₂) are bathed by the dielectric (113₂), so if there is electrical circulation between them (+₂ and -₂) signaling such a rise to the control (53) so it (53), to receive optional order from the conductor of the vehicle through the manager (54), processes on the electrical system the command to activate the generator/motor with electrical energy from the battery (52) in support of the effort made by the propulsion source of the vehicle in question. Assistance that can be total, with absolute closure of the free passage regulator (50) and the maximum opening of the energetic passage (50'), which gives the vehicle electrical power in its total degree, or partial due to the voluntary play in the gradual opening and closing of both regulators (50) and (50').

The descent of a slope by a land vehicle oro ne in height of aaircraft that carry the level described here implies, as figure 39 shows, that the vehicle to which the level (111) is installed is no longer horizontal, so the surface of both electro-conductive volumes (113₁ and 113₂) lose this condition; On the right side of level (111), theelectro-conductive volume (113₁) adopts the shape of a wedge, with its minor vertex on the right; This implies that the two internal ends of the electrical conductors (+₂ and -₂) housed there they remain electro-isolated, without emitting any signal to the control (53); while, to the left of it (111), the two electrical conductors (+₁ and -₁) are bathed by the dielectric (113₁), so if there is electrical circulation between them (+₁ and -₁) signaling such a decline tocontrol (53) so it (53), to receive optional order from the vehicle driver through the manager (54),processes on the electrical system the command to activate the generator/motor in electrical energy producing mode towards the battery (52) in order to take advantage of this decrease in the potential energy of the vehicle storing it for later use.

Production,which can be total with the absolute closure of the free passage regulator(50) and the maximum opening of the energetic passage (50'), which gives the vehicle total or partial electrical power through the voluntary play in the gradual opening and closing of both regulators (50) and (50'); In addition, at the discretion of the inverter (69) to limit the oleo-hydraulic traffic to the wheel or propeller device, as appropriate, and to the generator/motor (36), avoiding friction and loss of power in the rest of the circuit.

The presence, on all devices, in their corresponding:
Supply casing (0) of a focus (110).

Motor (29), wheel (129) or propeller (229) rotors of a counter (201).

Evacuation casing (00) of a photoelectric cell (100).

It causes that when these (29, 129 or 229) rotates, due to a pedaling, motorized impulse, or as a result of a descent, in the sinuses (1 and 01) of both (0 and 00) it occurs in each revolution of the same (29), a light flash on the latter (100) coming from the first (110) through the motor counter (201), since the spotlight (110) is always connected to the battery (52).

Periodic succession that gives us, when its cadence is processed, the frequency and rotation speed of each one of them, which is also processed in the control (53) and reflected in the manager (54) for any purpose.

It is not considered necessary to make this description more extensive so that any expert in the field understands the scope of the invention and the advantages derived from it.

The terms in which this report has been written should always be taken in a broad and non-limiting sense.

The materials, shape and arrangement of the elements will be susceptible to variation, as long as this does not imply an alteration of the essential characteristics of the invention presented here in accordance with the following

## Claims

1. Hydraulic transmission system with electromagnetic control developments for vehicles, with discretionary electric generation and propulsion that includes:
■ An electrical part, constituted by the connection through adaptable cables of:
• An adjustable electric generator/motor (36), which has:
◆ A free passage regulator (50).
◆ A energetic passage regulator (50').
◆ An induced (41) stator.
◆ A rotating inductor (42).
• A battery (52).
• An electronic control (53).
• An electronic manager (54).
• Two low solenoid valves (3).
• Two medium solenoid valves (4 and 04).
• Two high solenoid valves (5 and 05).
• A lower valve (77).
• A reversing valve a (78).
• A reversing valve b (79).
• A orientator motor (67¹).
• An elevator motor (67²).
• A light bulb ((100).
• A photoelectric sensor (110).
• An electronic level (111).
A hydraulic parth, which includes four categories of rotating devices: two of them are sources of energy: the motor device and the generator/motor; The first is responsible for providing the rest of the circuit with the hydraulic pressure sell produced by the primary source of rotary energy, whether it's of human origin well can it be a motor of any nature while, the second, it circumstantially comes well from the optional conversion into electricity well from said pressure injected by the motor rotor or from the potential energy of the system during the descent of the vehicle, or also from using theelectrical energy accumulated in a battery to carry out said increase in pressure to the rest of the hydraulic circuit in aid or discretionary substitution of the aforementioned propulsive action applied to the driving device.
The remaining pair: a wheel device and a propeller, are therespective people in charge of releasing the force ofthe pressure suppliedbyboth injector devices mentioned, either to the supporting mediumin the case of a land vehicle, either to the envelope of a marine or air vessel; application, which effect is the advancement of the vehicle, regardless of its nature.
Consequently, the hydraulic circuit has:
□ One or more motor devices, therefore, given the possibility that the system has one or multiple devices for receiving the oleo-hydraulic fluid emitted by it or them; Their number depends on the quantity of these receptors in order to provide adequate supply of said fluid.
□ One or more wheel devices, depending on the desired availability in the number of driving wheels of the vehicle in question.
□ One or more propeller devices, depending on the desired availability in the number of pusher propellers of the vehicle in question.
One or more wheel and propeller-type devices, depending on the desired versatility in various travel spaces and the availability of traction on both sides of the vehicle in question.
The composition of the motor, wheel and propeller devices is basically the same since all three are formed by two container bodies that are:
✔ motor casing (0), which has installed:
✔ An evacuation casing (00).
✔ The sufficient number of spheres to complete two series (89¹- 89³ and 89²- 89⁴) of them, each one filling the gaps-toroidals appeared by the respective confrontations in each of the motor, wheel and propeller devices present in the system in question:
Its supply bearing channel and motrix rotation bearing one.
Its evacuation bearing channel and motrix rotation bearing two.
✔ The sufficient number of low supply joints (88₁) to fill the toroidal joint gaps of such magnitude appeared by the respective confrontations in each one of the motor, wheel and propeller devices present in the system in question.
✔ The sufficient number of medium-low supply joints (88₂) to fill the toroidal joint gaps of such magnitude that appear due to the respective confrontations in each of the devices motor, wheel and propeller present in the system in question.
✔ The sufficient number of medium-high supply joints (88₃) to fill the toroidal joint gaps of such magnitude appeared by the respective confrontations in each of the motor, wheel and propeller devices present in the system in question.
✔ The sufficient number of high supply joints (88₄) to fill the toroidal joint gaps of such magnitude that appear due to the respective confrontations in each of the motor, wheel and propeller devices present in the system in question.
✔ The sufficient number of low evacuation joints (88'₁) to fill the toroidal joint gaps of such magnitude that appear due to the respective confrontations in each of the motor, wheel and propeller devices present in the system in question.
✔ The sufficient number of low-medium evacuation joints (88'₂) to fill the toroidal joint gaps of such magnitude that appear due to the respective confrontations in each of the motor, wheel and propeller devices present in the system in question.
✔ The sufficient number of medium-high evacuation joints (88'₃) to fill the toroidal joint gaps of such magnitude that appear due to the respective confrontationson each of the motor, wheel and propeller devices present in the system in question.
✔ Sufficient number of high jevacuation oints (88'₄) to fill the toroidal joint gaps of such magnitude that appear due to the respective confrontationsin each of motor, wheel and propeller devices present in the system in question.
The three differ in that, while the motor device also incorporates:
→ A motor rotor (29).
→ A pinion (16).
→ Three anchors (15₁, 15₂ and 15₃) per motor device; which unite in the correct sequence, in a fixed and stable way with each other and vehicle (60), to the supply cAsings (0) and evacuation one (00) characteristic of the combined motor device that the system includes, in the event of one or more wheel and/or propeller devices installed in connection with it, since their number, as has been seen, is the same.
→ Some pedals (60₁ and 60₂) or a motor.
The wheel device includes:
➢ A wheel rotor (129).
➢ Three anchors (15₇, 15₈ and 15₉) which join together in a fixed and stable manner, the supply casings and the evacuation one that are part of the device; The anchor (15₇) fixes both casings to:
∘ A bond (60²), which articulates with the elevator (67²) to
∘ A orientator (60¹), linked to the vehicle (60) by the ring (59) and geared to the director (67¹).
And the propeller device:
◆ A propeller rotor (229).
◆ Three anchors (15₇, 15₈ and 15₉), which join together, in a fixed and stable manner, the supply and evacuation casings of the device; The anchor (15₇) fixes both casings to:
◆ A bond (60²), which articulates with the elevator (67²) to
◆ A orientator (60¹), linked to the vehicle (60) by the ring (59) and geared to the director (67¹).
In view of possibilities of numerous wheel and wheel devicespropeller connected to their corresponding driving devices:
■ An electronic inverter (69) for each pair formed by a motor device and one wheel or propeller in hydraulic communication.
■ The sleeves (31) required to connect all the supply ducts (2) of the wheel and propeller devices that are installed to the evacuation duct (02) of the corresponding motor device and the evacuation ducts (02) of the latter with the corresponding supply (2) in the wheel and propeller devices; in addition to including the number of sleeves (31) required to intersperse the sames (31), in each supply connection (2) and evacuation (02), its corresponding inverter (69) as already mentioned.

2. Hydraulic transmission system with electromagnetic control developments for vehicles, with discretionary electric generation and propulsion which, according to the first claim, is **characterized in that** each hydraulic circuit, the result of the union of a motor device with a wheel or a propeller ones through separate sleeves connected to their respective supply and evacuation ducts, has nine different channels, isolated from each other; channels, which are continuation of the respective supply ducts (2) and evacuation ones (02) of both devices that when counting, the first (2) with three solenoid valves (3, 4 and 5) and the second with three outlets (03, 04 and 05) facing each other (3 to 03, 4 to 04 and 5 to 05) make way for their respective smaller, medium and larger turbines.
Oil-hydraulic traffic is produced byonly one of them, beingsame chosen by the conductor of the vehicle by giving said preference to the system through his mandate to the manager (54) who reverts it to thecontrol (53), which processes the opening order of the chosen supply solenoid valves in the driving device and in the wheel or propeller, while the rest remain occluded from the circulation through it. This gives rise to combinations of turbines of the same or different radius, which implies different power developments in each choice.
Since a generator/motor (36) is inserted in one ofsaid hydraulic circuits of the system, and this having a new bifurcation in the oleo-hydraulic communication, the vehicle conductor can also choose the preference of circulation through the free passage (38) or the energetic passage(39) through the corresponding instruction to the manager (54) that reverts it to the control (53), which processes the order for greater or lesser opening of the free passage regulators (50) and energetic step (50'). This gives rise to the variation of the electrical power generated by the generator/motor (36) while also offering a change in resistance to pedaling or to the action of the installed motor, depending on the case in question.
Set of regulators (50) and (50') that also affects the oleo-hydraulic traffic in case of conductor decision to activate, with energy from the battery (52) and by order given to the control (53) through the manager (54), the rotation of the inductor (42) so that it forces the circulation of the fluid that bathes it, an action that will be more or less vigorous depending on the electrical intensity applied to the issue and the degree of opening of those (50) and (50').

3. Hydraulic transmission system with electromagnetic control developments for vehicles, with discretionary electric generation and propulsion which, according to the first claim, is characterized because the system has a level (111) that determines the horizontality orinclination in the progress of the vehicle, so such information serves the control (53), at the request of the vehicle conductor by means of pertinent instruction to the manager (54), as a signal to activate the generator/motor in generating function by closing the free passage. (38) and opening of the energetic one (39).

4. Hydraulic transmission system with electromagnetic control developments for vehicles, with discretionary electric generation and propulsion which, according to the first claim is characterized because the wheel and propeller devices are orientable in three-dimensional space as they are attached to the vehicle by means of rotating ball joints, which have their supply and evacuation casings (0) and (00) joined by an anchor (15₇) to a bond (60²), which articulates with the elevator (67²) to a orientator (60¹), linked to the vehicle (60) by the ring (59) and geared to the director (67¹).
The orientation of the wheel or propeller device in question is produced, at the request of the vehicle conductor, by means of pertinent instructions to the manager (54), who requests from the control (53) the signal to activate the elevator (67²) or the director ( 67¹) to the desired degree to guide the desired device in one direction or another.

5. Hydraulic transmission system with electromagnetic control developments for vehicles, with discretionary electric generation and propulsion which, according to the first claim, is **characterized in that** it can reverse the oleo-hydraulic traffic direction while maintaining the direction of pedaling or engine rotation; To do this, the cyclist, pilot or driver, acts on this sense on the manager (54) opening or closing consequently the control the upper valves (76), lower valves (77), reversing a (78) and reversing b (79) to direct said flow through its upper right (70), upper left (71),lower right (72),left (73), of thepipe a (74) and pipe b so that the direction is one or the other as seen in the explanation.

6. Hydraulic transmission system with electromagnetic control developments for vehicles, with discretionary electric generation and propulsion which, according to the first claim is characterizedbecause it is capable of knowing and optimizing the temperature of its oleo-hydraulic fluid by means of a heater (37) which, if necessary, is capable of raising its temperature with the electricity of the battery (52) at the command of control (53); this is dispensed by determination of the manager (54) governed by the driver of the vehicle in question.
